# EUROPÄISCHE PATENTSCHRIFT

(11) **EP 0 894 381 B1**
(45) Veröffentlichungstag und Bekanntmachung des Hinweises auf die Patenterteilung: **09.01.2002**
(21) Anmeldenummer: 97920582.0
(22) Anmeldetag: 03.04.1997
(51) Int. Cl.: H04L 12/413

(54) **VERFAHREN ZUR STEUERUNG DES ZUGRIFFS AUF EINEN VON MEHREREN DATENQUELLEN GEMEINSAM BENUTZTEN ÜBERTRAGUNGSKANAL**
PROCESS FOR CONTROLLING ACCESS TO A TRANSMISSION CHANNEL USED IN COMMON BY SEVERAL DATA SOURCES
PROCEDE DE COMMANDE D'ACCES A UN CANAL DE TRANSMISSION UTILISE CONJOINTEMENT PAR PLUSIEURS SOURCES DE DONNEES

(30) Priorität: 18.04.1996 DE 19615411
(43) Veröffentlichungstag der Anmeldung: 03.02.1999
(73) Patentinhaber: SIEMENS AKTIENGESELLSCHAFT, 80333 München (DE)
(72) Erfinder: HAAS, Peter, D-85661 Forstinning (DE)
(86) Internationale Anmeldenummer: DE9700685
(87) Internationale Veröffentlichungsnummer: WO9740605

(56) Entgegenhaltungen:
- US-A- 5 353 287
- ELECTRONIC DESIGN, Bd. 42, Nr. 16, 8.August 1994, Seite 113/114, 116 XP000468744 WYLAND D ET AL: "THE ACCESS.BUS OFFERS IMPROVED I/O"

## Beschreibung

Bei verschiedenen Anwendungen der Datenübertragung muß der Zugriff auf einen von mehreren Datenquellen gemeinsam benutzten Übertragungskanal gesteuert werden. Dies ist beispielsweise bei der Konzentration der Paketdaten (HDLC-Frames) der einzelnen ISDN-Teilnehmer eines digitalen Telefonvermittlungssystems auf PCM-Zeitschlitze mit 64 kbit/s (Bd-Kanäle) der Fall. Hierbei müssen die HDLC-Frames mehrerer Baugruppen (Datenquellen) über einen Bd-Kanal (Übertragungskanal) übertragen werden.

Zur Steuerung der Zugriffsberechtigung wird dabei derzeit ein Verfahren benutzt, bei dem vor jedem HDLC-Frame (Datenrahmen) ein OPEN-FLAG und nach jedem HDLC-Frame ein CLOSE-FLAG gesendet wird, und bei dem als IDLE-Code stets eine ununterbrochene Folge von logischen Eins-Werten (MARK) gesendet wird. Dieses bekannte Verfahren hat den Nachteil, daß als IDLE-Code (Leerlaufbitfolge) nicht eine Folge von FLAG-Signalen, z.B. "01111110", sondern MARK gesendet wird, obwohl bei vielen Übertragungsprotokollen der IDLE-Code "FLAG" vorgeschrieben ist. Ein über das bekannte Verfahren übertragener Datenstrom muß daher in geeigneter Weise nachbearbeitet werden, um den Vorschriften vieler Übertragungsprotokolle zu genügen.

Der vorliegenden Erfindung liegt daher die Aufgabe zugrunde, ein Verfahren anzugeben, bei dem eine solche Nachbearbeitung nicht erforderlich ist.

Diese Aufgabe wird durch ein Verfahren zur Steuerung des Zugriffs auf einen von mehreren Datenquellen gemeinsam benutzten Übertragungskanal mit den Merkmalen nach Anspruch 1 gelöst. Bei diesem Verfahren sendet jede Datenquelle zwischen zwei Datenrahmen eine Leerlaufbitfolge (IDLE FLAG), die im Falle einer Ungleichheit zwischen dem Ausgangssignal dieser Datenquelle und dem Datenkollisionssignal durch eine Folge von logischen Eins-Werten bzw. nach dem vollständigen Aussenden eines Datenrahmens oder nach dem Abbruch der Sendung eines Datenrahmens oder, falls das Datenkollisionssignal in direkter Folge eine größere Zahl von logischen Eins-Werten als das Sendeabbruchsignal (ABORT) enthielt, durch ein FLAG-Signal gegeben ist.

Die Erfindung ist natürlich nicht auf die Konzentration der Paketdaten (HDLC-Frames) der einzelnen ISDN-Teilnehmer eines digitalen Telefonvermittlungssystems beschränkt. Dem Fachmann ist nach der Lektüre der vorliegenden Beschreibung natürlich klar, daß die Erfindung in zahlreichen ähnlichen technischen Situationen angewendet werden kann. Mit Hilfe seines allgemeinen Fachwissens fällt es dem Fachmann nach der Lektüre der vorliegenden Beschreibung nicht schwer, entsprechende Variationen der vorliegenden Erfindung selbst aufzufinden.

Vorteilhafte Weiterbildungen der Erfindung bilden den Gegenstand von Unteransprüchen.

Im folgenden wird die Erfindung anhand bevorzugter Ausführungsbeispiele und mit Hilfe der Figuren näher beschrieben.

Figur 1 zeigt in schematischer Weise eine mögliche Buskonfiguration, wie sie dem erfindungsgemäßen Verfahren zugrundeliegt. Hier bezeichnet VCC die Versorgungsspannung und R einen Pull-Up-Widerstand. AND steht für eine logische UND-Verknüpfung.

Figur 2 zeigt die Reihenfolge gesendeter Datenrahmen und Flags im Summenkanal beim erfindungsgemäßen Verfahren (b) im Vergleich zum Stand der Technik (a). Hier bedeuten die Symbole folgende Bitmuster:
- M: MARK
- OF: Open-Flag
- Ad: Adresse
- Dat: Daten des Frames
- c: CRC Prüfsumme
- CF: Close-Flag
- IF: Idle-Flag

Um die Beschreibung der vorliegenden Erfindung einfach und übersichtlich zu halten, wird die Erfindung nachstehend vorwiegend am Beispiel der Konzentration der Paketdaten (HDLC-Frames) der einzelnen ISDN-Teilnehmer eines digitalen Telefonvermittlungssystems beschrieben.

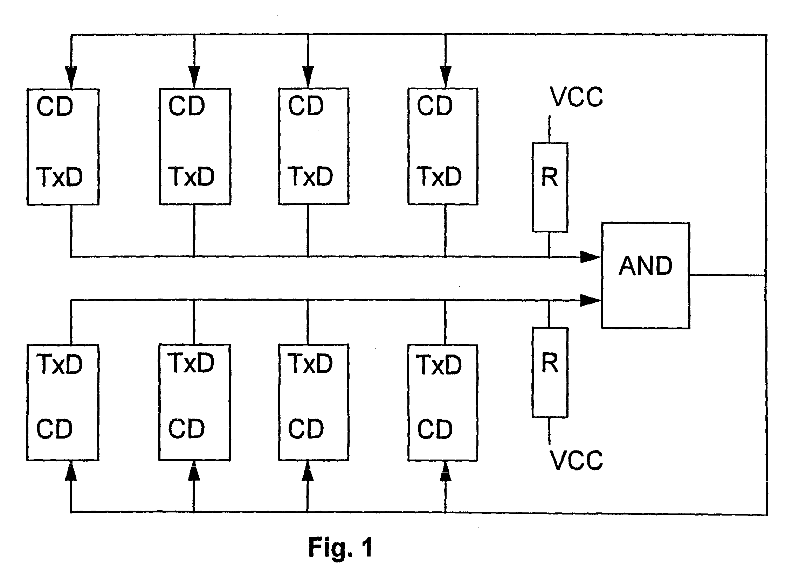

In der Digital Line Unit (DLU, digitale Teilnehmer-Leitungseinheit) eines digitalen Vermittlungssystems werden die Paketdaten (HDLC-Frames) der einzelnen ISDN-Teilnehmer auf PCM-Zeitschlitze mit 64 kbit/s (Bd-Kanäle, d.h. B-Kanäle, die für die Übertragung von D-Kanal-Information verwendet werden) konzentriert. Bei der Konzentration müssen die HDLC-Frames mehrere Baugruppen in einen Bd-Kanal übertragen werden. Zur Steuerung der Zugangsberechtigung auf den Bd-Kanal wird gemäß dem Stand der Technik ein Kollisionsverfahren benutzt, daß auf folgendem Prinzip beruht (Stand der Technik):
(1) Alle Datenquellen (Sender) sind mit ihren Datenausgängen (TxD) über einen Open-Collector-Bus und/oder durch logische UND-Verknüpfungen (siehe Figur 1) verbunden. Hierbei setzt sich eine logische Null gegenüber etwa vorhandenen logischen Einsen durch.
(2) Als IDLE-Code wird immer MARK (Dauerlage auf logisch Eins) gesendet.
(3) Das Summensignal aller Sender wird als Collision-Data-Signal (CD) an alle Sender zurückgegeben (siehe Figur 1).
(4) Für das Aussenden von Daten auf dem Bd-Kanal gibt es zwei Prioritätsstufen:
   a) 0 = hohe Priorität
      Sendefreigabe erfolgt, wenn auf CD die letzten 8 Bit in Folge mit '1' erkannt wurden.
   b) 1 = niedrige Priorität
      Sendefreigabe erfolgt, wenn auf CD die letzten 10 Bit in Folge mit '1' erkannt wurden.
(5) Die Prioritätsstufen werden wie folgt gewechselt:
   a) Jeder Sender beginnt mit der Priorität 0.
   b) Nach dem vollständigen Aussenden eines HDLC-Frames wird in die Priorität 1 gewechselt.
   c) Wird auf CD die Sendefreigabe für Priorität 1 erkannt, so wechseln alle Sender wieder in die Priorität 0.
(6) Ein Sender mit Zugriffsberechtigung sendet seine Daten über TxD aus und vergleicht jedes gesendete Bit mit dem Summensignal auf CD. Wird eine Ungleichheit erkannt, so wird das Aussenden der Frames abgebrochen. Der abgebrochene HDLC-Frame muß bei der nächsten Sendefreigabe vollständig wiederholt werden.
(7) Alle HDLC-Frames werden mit Open- und Close-Flag gesendet.

Nach diesem Prinzip setzen sich HDLC-Frames mit vielen Nullen am Anfang des Adressfeldes gegenüber anderen HDLC-Frames innerhalb der gleichen Prioritätsstufe durch. Da nach dem vollständigen Aussenden eines HDLC-Frames die Priorität erhöht wird, ist gewährleistet, daß alle Sender ihre Frames aussenden können. Vorteil dieses Verfahrens ist, daß sich bei auftretenden Kollisionen immer ein Sender durchsetzt und seinen Frame fehlerfrei übertragen kann. Ein Nachteil dieses bekannten Verfahrens besteht jedoch darin, daß als Idle-Code zwischen den HDLC-Frames keine FLAGS ("01111110") sondern MARK gesendet wird. Da der Idle-Code FLAG bei vielen Übertragungsprotokollen vorgeschrieben ist, muß ein über das beschriebene Verfahren entstandener Datenstrom nachbearbeitet werden, um den Protokollvorschriften zu genügen.

Hier schafft die Erfindung durch die folgenden Maßnahmen Abhilfe (erfindungsgemäßes Verfahren):

Das bestehende Verfahren wird in den folgenden Punkten geändert und ergänzt:
(2) Es werden unterschiedliche Idle-Codes gesendet:
   a) Immer wenn Ungleichheit zwischen TxD und CD auftritt, wird MARK gesendet.
   b) Nach vollständigem Aussenden eines HDLC-Frames oder nach Abbruch eines Frames durch ABORT ("11111111") wird FLAG gesendet. Dabei ist das erste bis n-te FLAG durch die Bitfolge "01111110" (8 Bit) gegeben, und alle weiteren FLAGS ab dem n+1-ten durch die Bitfolge "1111110" (7 Bit). Hierbei ist
      b1) n=1 für den Fall eines gemeinsamen OPEN-/CLOSE-FLAG und
      b2) n=2 für den Fall separater OPEN- bzw. CLOSE-FlAGS.
   c) FLAG wird auch gesendet, wenn auf CD mehr Bits in Folge mit '1' erkannt werden, als die Anzahl der '1'en bei einem ABORT.
(4) Für das Aussenden von Daten auf dem Bd-Kanal gibt es zwei Prioritätsstufen:
   a) 0 = hohe Priorität
      Sendefreigabe erfolgt, wenn auf CD n Flags erkannt wurden.
   b) 1 = niedrige Priorität
      Sendefreigabe erfolgt, wenn auf CD n+1 Flags erkannt wurden.
      Hierbei ist
   c) n=1 für den Fall eines gemeinsamen OPEN-/CLOSE-FLAG und
   d) n=2 für den Fall separater OPEN- bzw. CLOSE-FlAGS.
(7) Die HDLC-Frames werden ohne Open- und Close-Flags gesendet, da die benötigten Flags bereits durch den Idle-Code entstehen.
(8) Wenn nach dem Aussenden einer '0' auf CD eine '1' erkannt wird, so liegt eine Leitungsunterbrechung vor und der TxD-Pin wird dauerhaft (d.h. bis zu einer Quittung durch die Software) abgeschaltet.

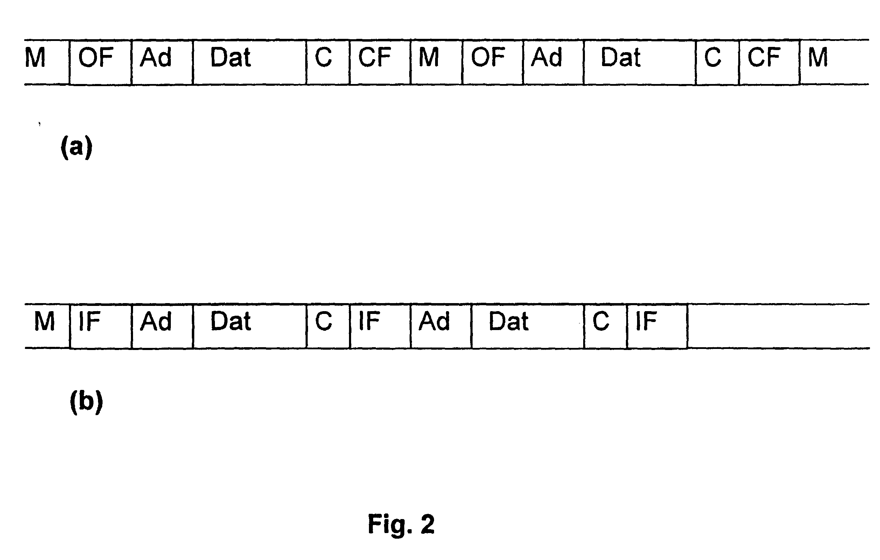

Da bei dem erfindungsgemäßen Verfahren zwischen den Frames (siehe Figur 2) als Idle-Code Flags gesendet werden, kann eine Nachbearbeitung des Datenstroms entfallen. Des weiteren wird die Übertragungskapazität durch das erfindungsgemäße Verfahren erhöht, da auf die 8 '1'en zwischen dem Close- und dem Open-Flag verzichtet wird. Zusätzlich kann mit nur einem Flag zwischen zwei Frames übertragen werden (optional). Durch das Übertragen der Flags findet ferner eine ständige Überwachung des Bussystems statt.

## Patentansprüche

1. Verfahren zur Steuerung des Zugriffs auf einen von mehreren Datenquellen gemeinsam benutzten Übertragungskanal zur Übertragung von Datenrahmen, die aus einer Adressinformation, Nutzdaten und einer Prüfsequenz bestehen, durch Datenquellen, die ein Datenkollisionssignal (CD) auswerten, dessen Wert der logischen UND-Verknüpfung aller Ausgangssignale aller den Übertragungskanal nutzenden Datenquellen entspricht, bei dem jede Datenquelle zwischen zwei Datenrahmen eine Leerlaufbitfolge (IDLE FLAG) sendet, die
a) im Falle einer Ungleichheit zwischen dem Ausgangssignal dieser Datenquelle und dem Datenkollisionssignal durch eine Folge von logischen Eins-Werten,
b) nach dem vollständigen Aussenden eines Datenrahmens oder nach dem Abbruch der Sendung eines Datenrahmens oder, falls das Datenkollisionssignal in direkter Folge eine größere Zahl von logischen Eins-Werten als das Sendeabbruchsignal (ABORT) enthielt, durch ein FLAG-Signal gegeben ist.

2. Verfahren nach Anspruch 1, bei dem für das Aussenden von Daten über den Übertragungskanal zwei Prioritätsstufen existieren, nämlich
a) 0, entsprechend einer hohen Priorität, bei der die Sendefreigabe erfolgt, wenn das Datenkollisionssignal einer Folge von n FLAG-Signalen entspricht,
b) 1, entsprechend einer niedrigen Priorität, bei der die Sendefreigabe erfolgt, wenn das Datenkollisionssignal einer Folge von n+1 FLAG-Signalen entspricht,
wobei
c) n=1 für den Fall eines gemeinsamen OPEN-/CLOSE-FLAG und
d) n=2 für den Fall separater OPEN- bzw. CLOSE-FLAGS.

3. Verfahren nach Anspruch 2, bei dem jede Datenquelle ihre Prioritätsstufe nach folgendem Schema wechselt:
a) jede Datenquelle beginnt mit der Priorität 0;
b) nach dem vollständigen Aussenden eines Datenrahmens wechselt die Datenquelle in die Priorität 1;
c) nimmt das Datenkollisionssignal der Wert 1 an, wechseln alle Datenquellen in die Priorität 0.

4. Verfahren nach einem der vorhergehenden Ansprüche, bei dem die IDLE-Flags nach folgendem Schema erzeugt werden:
a) das erste bis zum n-ten IDLE-Flag besteht aus der 8-Bit Folge "01111110";
b) das n+1-te und alle weiteren IDLE-Flags bestehen jeweils aus der 7-Bit Folge "1111110",
wobei
c) n=1 für den Fall eines gemeinsamen OPEN-/CLOSE-FLAG und
d) n=2 für den Fall separater OPEN- bzw. CLOSE-FLAGS.

## Claims

1. Method for controlling the access to a transmission channel used jointly by a number of data sources, for the transmission of data frames which consist of address information, user data and a test sequence, by data sources which evaluate a data collision signal (CD), the value of which corresponds to the logical AND operation of all output signals of all data sources using the transmission channel, in which method each data source sends an idle flag between two data frames which is given
a) by a sequence of logical one values in the case of an inequality between the output signal of this data source and the data collision signal,
b) by a flag signal after a data frame has been completely sent out or after the transmission of a data frame has been aborted or, if the data collision signal contained a greater number of logical one values than the transmission abort signal (ABORT) in a direct sequence.

2. Method according to Claim 1, in which two priority levels exist for sending out data via the transmission channel, namely
a) 0, corresponding to a high priority, in which the transmission is enabled if the data collision signal corresponds to a frequency of n flag signals.
b) 1, cortesponding to a low priority, in which the transmission is enabled if the data collision signal corresponds to a sequence of n+1 flag signals, where
c) n=1 for the case of a common OPEN/CLOSE flag and
d) n=2 for the case of separate OPEN or CLOSE flags.

3. Method according to Claim 2, in which each data source changes its priority level in accordance with the following arrangement:
a) each data source begins with the priority 0;
b) after a data frame has been completely sent out, the data source changes to priority 1;
c) if the data collision signal assumes the value 1, all data sources change to priority 0.

4. Method according to one of the preceding claims, in which the IDLE flags are generated in accordance with the following arrangement:
a) the first to nth IDLE flag consists of the 8-bit sequence "01111110";
b) the n+1th and all further IDLE flags in each case consist of the 7-bit sequence "1111110", where
c) n=1 for the case of a common OPEN/CLOSE flag and
d) n=2 for the case of separate OPEN or CLOSE flags.

## Revendications

1. Procédé de commande d'accès à un canal de transmission utilisé conjointement par plusieurs sources de données pour la transmission de trames de données composées d'une information d'adresse, de données utiles et d'une séquence de contrôle, par des sources de données qui évaluent un signal de collision de données (CD) dont la valeur correspond à l'opération logique ET de tous les signaux de sortie de toutes les sources de données utilisant ledit canal de transmission, dans lequel chaque source de données envoie entre deux trames de données une suite de bits à vide (IDLE FLAG), qui est donnée
a) dans le cas d'une inégalité entre le signal de sortie de cette source de données et le signal de collision de données, par une suite de 1 logiques,
b) après l'envoi intégral d'une trame de données ou après l'abandon de l'envoi d'une trame de données ou si le signal de collision de données contenait par suite directe un nombre plus important de 1 logiques que le signal d'abandon d'envoi (ABORT), par un signal FLAG.

2. Procédé selon la revendication 1, dans lequel il existe deux niveaux de priorité pour l'envoi de données via le canal de transmission, à savoir
a) 0, correspondant à une priorité élevée où il y a autorisation d'envoi si le signal de collision de données correspond à une suite de n signaux FLAG,
b) 1, correspondant à une priorité faible où il y a autorisation d'envoi si le signal de collision de données correspond à une suite de n+1 signaux FLAG,
où
c) n=1 pour le cas d'un OPEN et CLOSE FLAG commun, et
d) n=2 pour le cas d'OPEN resp. CLOSE FLAGS séparés.

3. Procédé selon la revendication 2, dans lequel chaque source de données change son niveau de priorité selon le schéma suivant :
a) chaque source de données commence par la priorité 0;
b) après l'envoi intégral d'une trame de données, la source de données passe à la priorité 1;
c) si le signal de collision de données prend la valeur 1, toutes les sources de données passent à la priorité 0.

4. Procédé selon l'une des revendications précédentes, dans lequel les IDLE FLAGS sont obtenus selon le schéma suivant :
a) le premier jusqu'au nième IDLE FLAG est composé de la suite de 8 bits "01111110";
b) le n+1ième et tous les autres IDLE FLAGS sont composés chacun de la suite de 7 bits "1111110",
où
c) n=1 pour le cas d'un OPEN et CLOSE FLAG commun, et
d) n=2 pour le cas d'OPEN resp. CLOSE FLAGS séparés.
